# FASCICULE DE BREVET EUROPEEN

(11) **EP 4 111 574 B1**
(45) Date de publication et mention de la délivrance du brevet: **03.01.2024**
(21) Numéro de dépôt: 21710538.6
(22) Date de dépôt: 17.02.2021
(51) Int. Cl.: H02K 1/276, H02K 7/04, H02K 15/12, H02K 1/02, H02K 15/03

(54) **ROTOR POUR MOTEUR ÉLECTRIQUE ÉQUIPÉ D'AIMANTS PERMANENTS EN MATIÈRE PLASTIQUE**
ROTOR FÜR EINEN ELEKTROMOTOR AUSGESTATTET MIT PERMANENTMAGNETEN AUS KUNSTSTOFFMATERIAL
ROTOR FOR AN ELECTRICAL MOTOR EQUIPT WITH PERMANENT MAGNETS MADE OF PLASTIC MATERIAL

(30) Priorité: 24.02.2020 FR 2001796
(43) Date de publication de la demande: 04.01.2023
(73) Titulaire: NOVARES France, 78140 Vélizy-Villacoublay (FR)
(72) Inventeur: LEDIEU, Cédric, 62144 MONT SAINT ELOI (FR)
(74) Mandataire: Germain Maureau
(86) Numéro de dépôt international: PCT/FR2021/050280
(87) Numéro de publication internationale: WO 2021/170940

(56) Documents cités:
- WO-A1-2017/012766
- DE-A1-102014 205 675
- US-A1- 2018 109 167

## Description

L'invention concerne un rotor pour moteur électrique. L'invention concerne également un moteur électrique comprenant un tel rotor.

De manière générale, les moteurs électriques actuels comportent un rotor solidaire d'un arbre et un stator qui entoure le rotor. Le stator est monté dans un carter qui comporte des roulements pour le montage en rotation de l'arbre. Le rotor comporte un corps formé par un empilage de tôles ou roues polaires (claw pole) maintenues sous forme de paquet au moyen d'un système de fixation adapté. Le corps du rotor comporte des cavités internes logeant des aimants permanents. Le stator comporte un corps constitué par un empilage de tôles formant une couronne, dont la face intérieure est pourvue de dents délimitant deux à deux une pluralité d'encoches ouvertes vers l'intérieur du corps de stator et destinées à recevoir des enroulements de phase. Ces enroulements de phase traversent les encoches du corps de stator et forment des chignons faisant saillie de part et d'autre du corps de stator. Les enroulements de phase peuvent par exemple être constitués d'une pluralité de segments de conducteur en forme de U, les extrémités libres de deux segments adjacents étant reliées entre elles par soudage.

Dans le rotor, le paquet de tôles est enserré axialement entre un flasque avant et un flasque arrière montés coaxialement à l'arbre. Chaque flasque a globalement la forme d'un disque s'étendant dans un plan radial perpendiculaire à l'axe de l'arbre. Chaque flasque comporte un orifice central pour le montage coaxial sur l'arbre et plusieurs trous traversants destinés à recevoir des vis de fixation traversant axialement l'ensemble du paquet de tôles, lesdites vis étant solidarisées aux flasques au moyen d'écrous. Les flasques avant et arrière sont généralement formés d'un matériau amagnétique, conducteur de chaleur, par exemple un métal.

Lors de la rotation du rotor, les aimants permanents sont soumis à la force centrifuge. De ce fait, si les aimants n'étaient pas maintenus en position à l'intérieur des cavités du corps du rotor, ils auraient tendance à se déplacer selon une direction axiale dans les cavités. Pour éviter ces déplacements gênants, une solution connue consiste à plaquer les aimants contre le bord périphérique externe des cavités au moyen de ressorts et de plaquettes de maintien, dénommées laminettes. Toutefois, au fur et à mesure de l'utilisation du rotor, la force d'appui des ressorts et des laminettes tendant à diminuer, les aimants peuvent être soumis à de légers déplacements. Ces légers déplacements génèrent à la fois un déséquilibrage du rotor, ce qui a un impact négatif sur le rendement du moteur électrique, et des bruits mécaniques, qui peuvent être gênants pour les personnes se trouvant à proximité du moteur électrique.

Par ailleurs, l'utilisation de ressorts et de laminettes complexifie grandement le procédé de fabrication et d'assemblage de ce type de rotor.

En outre, WO 2017/012766 A1 divulgue un rotor pour moteur électrique comprenant des aimants permanents étant formés d'une matrice en matière plastique incorporant des particules possédant des propriétés magnétiques.

Un des buts de l'invention est donc de proposer une solution au problème du déplacement des aimants permanents au sein d'un rotor de moteur électrique tel que décrit précédemment, aussi que d'améliorer l'équilibrage du rotor connu.

A cet effet, l'invention concerne un rotor pour moteur électrique comprenant :
- un arbre de rotor monté rotatif autour d'un axe ;
- un paquet de tôles monté coaxialement sur l'arbre de rotor, ledit paquet de tôles comprenant une pluralité de cavités internes ;
- un pluralité d'aimants permanents logés à l'intérieur des cavités internes du paquet de tôles ;
- un flasque avant et un flasque arrière montés coaxialement sur l'arbre de rotor et agencés axialement de part et d'autre du paquet de tôles ;

dans lequel au moins l'un des flasques avant et arrière est formé dans un matériau plastique et est venu de matière avec la pluralité d'aimants permanents, chaque aimant permanent étant formé d'une matrice en matière plastique incorporant des particules possédant des propriétés magnétiques ; et
dans lequel l'autre desdits flasques avant et arrière est formé en métal, la densité du flasque en matière plastique étant sensiblement égale à la densité du flasque en métal.

Ainsi configuré, le rotor de l'invention peut être assemblé de manière simple du fait du nombre réduit de ses pièces constitutives. L'utilisation d'aimants permanents en matière plastique permet de réunir sous la forme d'un sous-ensemble monobloc les flasques d'équilibrage et les aimants permanents. Durant le fonctionnement du moteur électrique, les aimants permanents ne sont donc plus soumis à un déplacement relatif par rapport au paquet de tôles, ce qui permet de réduire les bruits mécaniques par rapport à une structure conventionnelle de rotor. Par ailleurs, du fait que la densité du flasque en matière plastique est sensiblement égale à la densité du flasque en métal, l'équilibrage du rotor est amélioré.

Selon d'autres caractéristiques, le rotor de l'invention comporte une ou plusieurs des caractéristiques optionnelles suivantes considérées seules ou en combinaison :
- les particules possédant des propriétés magnétiques sont constituées d'un matériau choisi parmi la ferrite ou une terre rare.
- le matériau plastique dans lequel est formé ledit au moins un flasque est choisi parmi le polyamide (PA) 6, le polyamide (PA) 12, et le polysulfure de phénylène (PPS).
- le flasque en métal est formé en aluminium.
- la matrice de chacun des aimants permanents est constituée d'un matériau choisi parmi le polyamide (PA) 6, le polyamide (PA) 12, et le polysulfure de phénylène (PPS).

Selon un autre aspect, l'invention concerne un moteur électrique comprenant un rotor tel que défini précédemment.

L'invention sera davantage comprise à la lecture de la description non limitative qui va suivre, faite en référence aux figures ci-annexées.
[Fig. 1] est une vue en perspective d'un rotor selon un mode particulier de réalisation de l'invention,
[Fig. 2] est une vue en coupe du rotor de la figure 1 selon le plan de coupe P 1,
[Fig. 3] est une vue en coupe du rotor de la figure 1 selon le plan de coupe P2,
[Fig. 4] est une vue en coupe transversale du rotor de la figure 1,
[Fig. 5] est une vue en perspective de l'ensemble formé d'un des flasques d'extrémité du rotor de la figure 1, des aimants permanents venus de matière avec ledit flasque et du paquet de tôles logeant lesdits aimants permanents,
[Fig. 6] est une vue en perspective du sous-ensemble formé d'un des flasques d'extrémité du rotor de la figure 1 et des aimants permanents venus de matière avec ledit flasque,
[Fig. 7] est une vue en coupe axiale d'un moteur électrique incorporant le rotor représenté sur la figure 1.

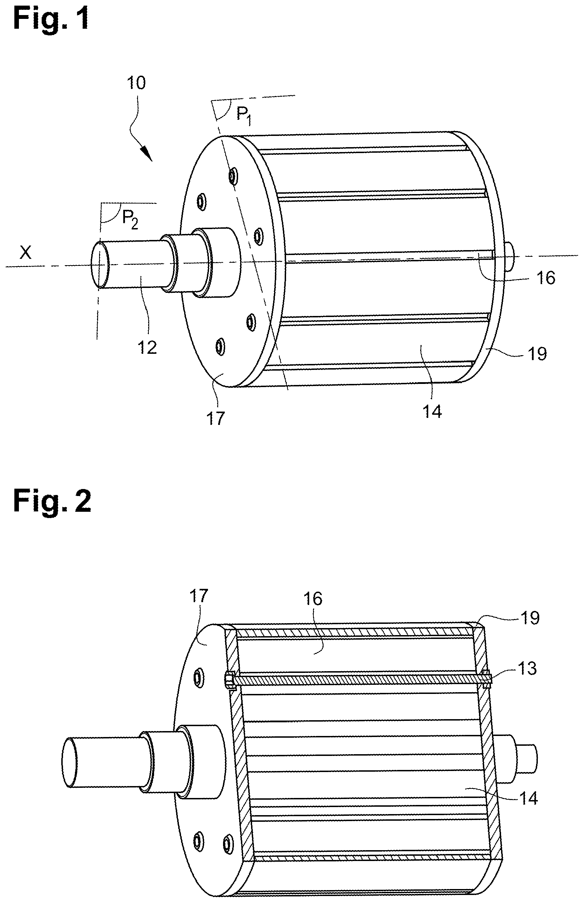

Les figures 1 à 4 représentent un rotor 10 comprenant un corps formé par un paquet de tôles 14 réalisé dans un matériau ferromagnétique, notamment en acier, ainsi qu'une pluralité d'aimants permanents 16 destinés à être logés dans une pluralité de cavités internes 15 formées à l'intérieur du paquet de tôles 14, chaque cavité interne 15 logeant un aimant permanent 16. Le paquet de tôles 14 est monté coaxialement sur un arbre 12 monté rotatif autour d'un axe X. L'arbre 12 pourra être emmanché en force à l'intérieur d'une ouverture centrale du paquet de tôles 14 de manière à lier en rotation le corps du rotor avec l'arbre 12.

Le paquet de tôles 14 est formé d'un empilement axial de tôles qui s'étendent dans un plan radial perpendiculaire à l'axe X de l'arbre 12. Une pluralité de trous de fixation 11 sont réalisés dans le paquet de tôles 14 pour permettre le passage de boulons de fixation 13 des tôles du paquet. Ces trous de fixation 11 sont traversants de sorte qu'il est possible de faire passer à l'intérieur de chaque trou 11 un boulon 13. Une première extrémité des boulons 13 est en appui contre la face externe d'un flasque d'extrémité avant 17, tandis que l'autre extrémité des boulons est en appui contre la face externe d'un flasque d'extrémité arrière 19. Ainsi, le paquet de tôles 14 est enserré axialement entre le flasque d'extrémité avant 17 et le flasque d'extrémité arrière 19. Ces flasques 17, 19 permettent d'assurer un équilibrage du rotor 10 tout en permettant un bon maintien des aimants 16 à l'intérieur de leur cavité 15. L'équilibrage peut être effectué par ajout ou retrait de matière. Le retrait de matière peut être effectué par usinage, tandis que l'ajout de matière peut être effectué en implantant des éléments dans des ouvertures prévues à cet effet et réparties suivant la circonférence du flasque 17, 19.

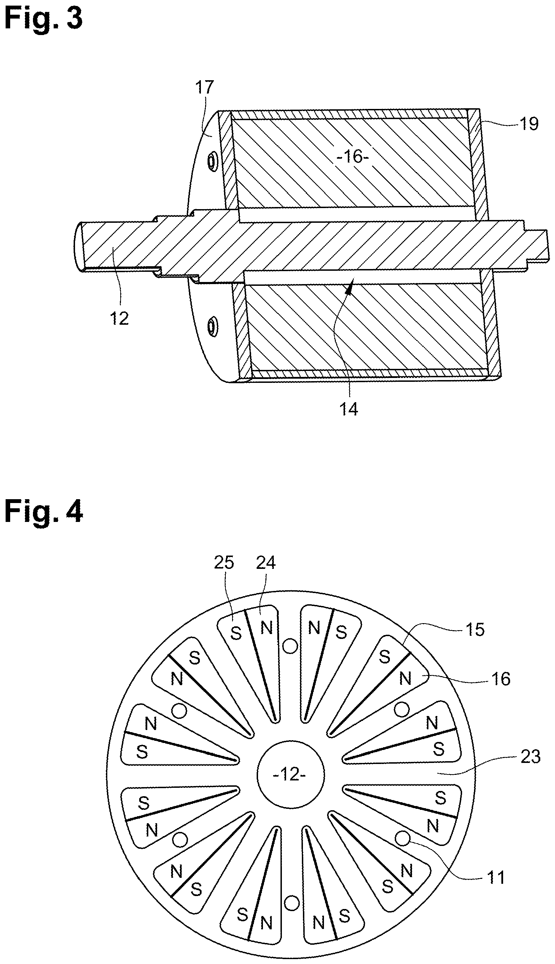

Comme illustré sur la figure 4, qui est une vue en coupe du rotor 10 selon un plan de coupe orthogonal à l'axe X, les cavités 15 s'étendent suivant une direction radiale par rapport à l'axe X et sont axialement traversantes. Elles possèdent une section sensiblement triangulaire et sont réparties uniformément autour de l'axe X. Deux cavités 15 directement adjacentes sont séparées par un segment radial 23 du paquet de tôles 14 de sorte que le corps du rotor est constitué d'une alternance de cavités 15 et de segments 23 lorsque l'on suit une circonférence du rotor 10. Chaque cavité 15 loge un aimant 16 unique. Les aimants permanents 16 sont à aimantation orthoradiale, c'est-à-dire que les deux faces d'extrémité 24, 25 de chaque aimant 16 qui sont adjacentes l'une par rapport à l'autre dans le sens orthoradial sont magnétisées de manière à pouvoir générer un flux magnétique suivant une orientation orthoradiale par rapport à l'axe X. Parmi ces faces d'extrémité 24, 25, il faut distinguer la face 24 correspondant au pôle Nord de l'aimant 16, représenté par la lettre N sur la figure 4, et la face 25 correspondant au pôle Sud de l'aimant 16, représenté par la lettre S sur la figure 4. Les aimants 16 situés dans deux cavités 15 consécutives sont de polarités alternées. Ainsi disposés, les aimants 16 génèrent dans le paquet de tôles 14 un flux magnétique orienté radialement et dirigé vers la périphérie externe du corps du rotor.

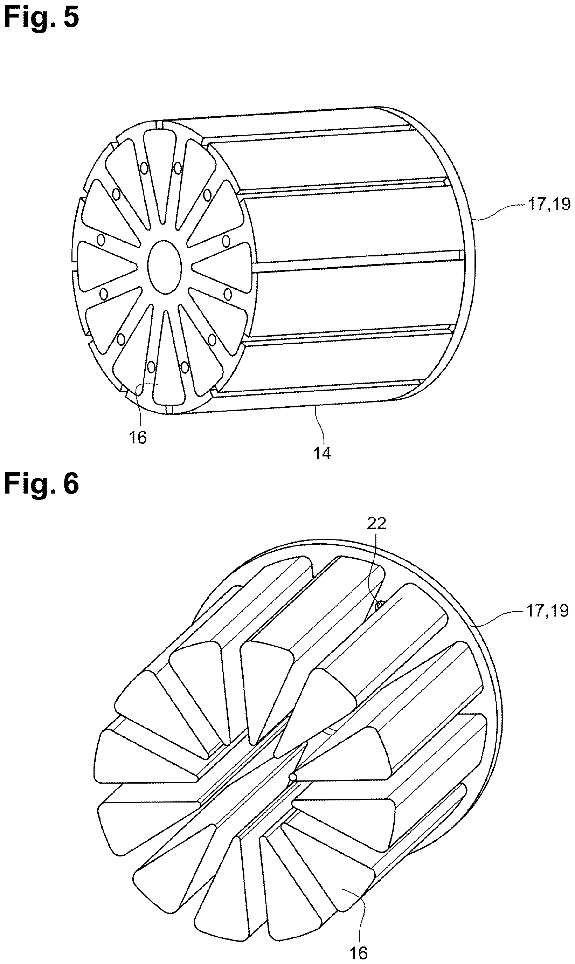

En référence à la figure 5, il est représenté un ensemble formé, d'une part, d'un sous-ensemble, représenté sur la figure 6, constitué d'un des flasques d'extrémité 17 ou 19 du rotor 10 et de la pluralité d'aimants permanents 16, ledit flasque étant venu de matière avec la pluralité d'aimants permanents 16, et, d'autre part, du paquet de tôles 14 logeant les aimants permanents 16. Ce flasque 17 ou 19 possède la forme d'un disque s'étendant dans un plan radial perpendiculaire à l'axe X de l'arbre 12. Le flasque 17 ou 19 comporte un orifice central (non représenté) pour le montage coaxial sur l'arbre 12 et plusieurs trous traversants 22 destinés à recevoir les boulons de fixation 13 traversant axialement l'ensemble du paquet de tôles 14. Le flasque 17 ou 19 est formé par moulage d'un matériau plastique. Le matériau plastique pourra avantageusement être choisi parmi le polyamide (PA) 6, le polyamide (PA) 12, et le polysulfure de phénylène (PPS). L'autre flasque 17 ou 19 pourra être formé dans le même matériau plastique ou dans un matériau métallique, par exemple en aluminium. Dans ce dernier cas et de manière à permettre un bon équilibrage du rotor, la densité du flasque en matière plastique sera sensiblement égale à la densité du flasque en métal. Les aimants permanents 16 seront formés d'une matrice en matière plastique incorporant des particules possédant des propriétés magnétiques. La matière constitutive de la matrice pourra avantageusement être choisie parmi le polyamide (PA) 6, le polyamide (PA) 12, et le polysulfure de phénylène (PPS) et les particules possédant des propriétés magnétiques pourront avantageusement être constituées d'un matériau choisi parmi la ferrite ou une terre rare. Les aimants permanents 16 pourront par exemple être venus de matière par injection bi-matière avec le flasque 17 ou 19 en matière plastique.

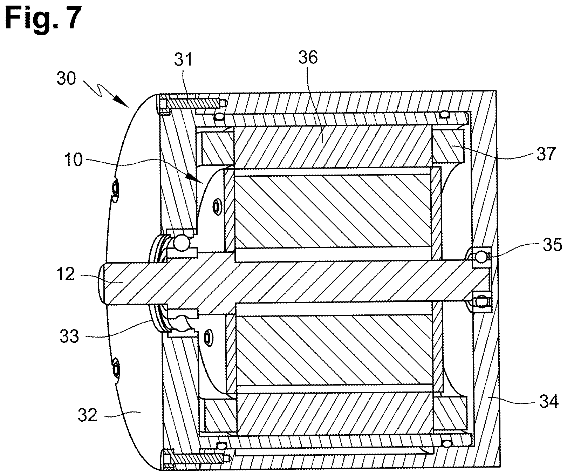

En référence à la figure 7, il est représenté un moteur électrique 30 mettant en oeuvre le rotor 10 de la figure 1. Ce moteur électrique 30 comprend notamment un carter en deux parties logeant le rotor 10 solidaire en rotation de l'arbre 12 et un stator 36 annulaire qui entoure le rotor 10 de manière coaxiale à l'arbre 12. Le carter est constitué notamment d'un palier avant 32 et un palier arrière 34 connectés l'un à l'autre au moyen de vis de fixation 31. Les paliers 32, 34 sont de forme creuse et portent chacun centralement un roulement à billes respectivement 33 et 35 pour le montage en rotation de l'arbre 32. Comme illustré sur la figure 7, des chignons 37 font saillie axialement de part et d'autre du corps de stator 36 et sont logés dans l'espace intermédiaire séparant le stator 36 des paliers respectifs 32, 34.

L'invention n'est évidemment pas limitée à la configuration de l'invention telle que décrite précédemment.

## Revendications

1. Rotor (10) pour moteur électrique (30) comprenant :
- un arbre (12 ) de rotor monté rotatif autour d'un axe (X);
- un paquet de tôles (14) monté coaxialement sur l'arbre (12) de rotor, ledit paquet de tôles (14) comprenant une pluralité de cavités internes (15);
- un pluralité d'aimants permanents (16) logés à l'intérieur des cavités internes (15) du paquet de tôles (14);
- un flasque avant (17) et un flasque arrière (19) montés coaxialement sur l'arbre (32) de rotor et agencés axialement de part et d'autre du paquet de tôles (14);
dans lequel l'un des flasques avant et arrière (17, 19) est formé dans un matériau plastique et est venu de matière avec la pluralité d'aimants permanents (16), chaque aimant permanent (16) étant formé d'une matrice en matière plastique incorporant des particules possédant des propriétés magnétiques ;
**caractérisé en ce que** l'autre desdits flasques avant et arrière (17, 19) est formé en métal, la densité du flasque en matière plastique étant sensiblement égale à la densité du flasque en métal.

2. Rotor (10) selon la revendication 1, **caractérisé en ce que** les particules possédant des propriétés magnétiques sont constituées d'un matériau choisi parmi la ferrite ou une terre rare.

3. Rotor (10) selon la revendication 2, **caractérisé en ce que** le matériau plastique dans lequel est formé ledit au moins un flasque est choisi parmi le polyamide (PA) 6, le polyamide (PA) 12, et le polysulfure de phénylène (PPS).

4. Rotor (10) selon l'une des revendications précédentes, **caractérisé en ce que** le flasque en métal est formé en aluminium.

5. Rotor (10) selon l'une des revendications précédentes, **caractérisé en ce que** la matrice de chacun des aimants permanents est constituée d'un matériau choisi parmi le polyamide (PA) 6, le polyamide (PA) 12, et le polysulfure de phénylène (PPS).

6. Moteur électrique (30) comprenant un rotor (10) selon l'une des revendications précédentes.

## Patentansprüche

1. Rotor (10) für einen Elektromotor (30), umfassend:
- eine Rotorwelle (12), die um eine Achse (x) drehbar montiert ist;
- ein Blechpaket (14), das koaxial an der Rotorwelle (12) montiert ist, wobei das Blechpaket (14) eine Vielzahl von inneren Hohlräumen (15) umfasst;
- eine Vielzahl von Permanentmagneten (16), die in den inneren Hohlräumen (15) des Blechpakets (14) untergebracht sind;
- ein vorderer Flansch (17) und ein hinterer Flansch (19), die koaxial an der Rotorwelle (32) montiert und axial zu beiden Seiten des Blechpakets (14) angeordnet sind;
wobei der eine der vorderen und hinteren Flansche (17, 19) aus einem Kunststoffmaterial gebildet und integral mit der Vielzahl von Permanentmagneten (16) ist, wobei jeder Permanentmagnet (16) aus einer Matrix aus Kunststoff gebildet ist, die Partikel enthält, die über magnetische Eigenschaften verfügen;
**dadurch gekennzeichnet, dass** der andere der vorderen und hinteren Flansche (17, 19) aus Metall gebildet ist, wobei die Dichte des Kunststoffflansches im Wesentlichen gleich der Dichte des Metallflansches ist.

2. Rotor (10) nach Anspruch 1, **dadurch gekennzeichnet, dass** die Partikel, die über magnetische Eigenschaften verfügen, aus einem Material bestehen, das aus Ferrit oder aus einem Metall der Seltenen Erden ausgewählt ist.

3. Rotor (10) nach Anspruch 2, **dadurch gekennzeichnet, dass** das Kunststoffmaterial, aus dem der mindestens eine Flansch gebildet ist, aus Polyamid (PA) 6, Polyamid (PA) 12 und Polyphenylensulfid (PPS) ausgewählt ist.

4. Rotor (10) nach einem der vorhergehenden Ansprüche, **dadurch gekennzeichnet, dass** der Metallflansch aus Aluminium geformt ist.

5. Rotor (10) nach einem der vorhergehenden Ansprüche, **dadurch gekennzeichnet, dass** die Matrix jedes der Permanentmagnete aus einem Material besteht, das aus Polyamid (PA) 6, Polyamid (PA) 12 und Polyphenylensulfid (PPS) ausgewählt ist.

6. Elektromotor (30), einen Rotor (10) nach einem der vorhergehenden Ansprüche umfassend.

## Claims

1. A rotor (10) for electric motor (30) comprising:
- a rotor shaft (12) rotatably mounted about an axis (X):
- a lamination stack (14) mounted coaxially on the rotor shaft (12), said lamination stack (14) comprising a plurality of inner cavities (15);
- a plurality of permanent magnets (16) housed inside the inner cavities (15) of the lamination stack (14);
- a front flange (17) and a rear flange (19) mounted coaxially on the rotor shaft (32) and arranged axially on either side of the lamination stack (14);
in which one of the front and rear flanges (17, 19) is formed in a plastic material and is integral with the plurality of permanent magnets (16), each permanent magnet (16) being formed of a matrix made of plastic material incorporating particles having magnetic properties;
**characterized in that** the other of said front and rear flanges (17, 19) is formed of metal, the density of the plastic flange being substantially equal to the density of the metal flange.

2. The rotor (10) according to claim 1, **characterized in that** the particles having magnetic properties consist of a material selected from ferrite or a rare earth.

3. The rotor (10) according to claim 2, **characterized in that** the plastic material in which said at least one flange is formed, is selected from polyamide (PA) 6, polyamide (PA) 12, and polyphenylene sulfide (PPS).

4. The rotor (10) according to any of the preceding claims, **characterized in that** the metal flange is formed of aluminum.

5. The rotor (10) according to any of the preceding claims, **characterized in that** the matrix of each of the permanent magnets consists of a material selected from polyamide (PA) 6, polyamide (PA) 12, and polysulfide phenylene (PPS).

6. An electric motor (30) comprising a rotor (10) according to any of the preceding claims.
